# EUROPEAN PATENT APPLICATION

(11) **EP 1 503 283 A1**
(43) Date of publication of application: **02.02.2005**
(21) Application number: 03291952.4
(22) Date of filing: 01.08.2003
(51) Int. Cl.: G06F 9/445

(54) **Data processing system and method**

(71) Applicant: Hewlett-Packard Development Company, L.P., Houston, TX 77070 (US)
(72) Inventor: Stephan, Yan, 38130 Echiroles (FR); Neumen, Paul, 38640 Claix (FR)
(74) Representative: Lloyd, Richard Graham

(57) **Abstract**

Data processing system and method of operating a computer system; the computer system comprising first initialisation code, second initialisation code and a first software to read at least data of a storage device; the storage comprising first and second storage regions: the second storage region being invisible to the first software; second initialisation code being arranged to provide information associated with at least one of the first and second regions to the first software and to access the second region by intercepting storage access request directed to the first initialisation software.

## Description

### Field of the Invention

The present invention relates to a data processing system and method.

### Background to the Invention

The structure of a physical disc such as, for example, an HDD, is such that it contains a number of primary partitions. A primary partition is a portion of a physical disc that functions, in effect, as a separate disc. For master boot record (MBR) discs, up to four primary partitions can be created, or three primary partitions together with an extended partition. For basic GUID partition table (GPT) discs, up to 128 primary partitions can be created. Extended partitions, which can be created for master boot record discs only, are useful if more than four volumes are required on a basic MBR disc. However, unlike primary partitions, extended partitions are not formatted with respective file systems and they are not assigned respective drive letters. Instead, one or more logical drives within the extended partition are created. Once a logical drive has been created, it is then formatted and assigned a drive letter.

For a master boot record disc, the master boot record is stored within the first sector of the hard disc and is used in the boot process for a computer. The master boot record contains the partition table for the disc and a small amount of executable code, known as the master boot code, at CHS=0,0,1 or LBA=0. GPT discs implement a disc-partitioning scheme such as is used by the extensible firmware interface (EFI) for Itanium-based computers. GPT offers advantages over MBR partitions since it allows up to 128 partitions per disc, provides support for up to 18 exabytes, allows primary and backup partition tables for redundancy, and supports unique disc and partition IDs (GUIDs).

For either of these partitioning schemes or disc types, it is possible to place, within a partition, an operating system that is executable within that partition. This also implies that an application running on top of the operating system can only access the disc partition with which the operating system is associated.

It is often the case that discs are partitioned into at least two portions. The first portion is known as a data portion and is used, as is conventional, to hold the operating system and any associated applications and data stemming from the operating system or applications. A second portion of such a partitioned disc might be a hidden partition that is used to contain, for example, diagnostic support tools, which might not be used by, or might be inaccessible to, all but the most sophisticated of computer users due to their specialist nature and the, hopefully, infrequent need to use such diagnostics or other specialist software. This type of software might be used to provide technical support to a user in the event that the user's computer has suffered a fault. Typically, the diagnostics software is accessed when booting the computer via the BIOS at boot time. The BIOS is instructed to deviate from the usual boot procedure and to invoke the diagnostics software following, for example, the POST and before handing over control to the operating system loader, which ultimately loads the operating system.

A sophisticated user might store many such infrequently used system applications within the hidden partition. While this might suit the sophisticated user, it presents the problem that the data or software contained within the hidden partition might be overlooked when creating a disc image or creating a back-up of the disc since, from the perspective of the application performing the disc back-up, which runs on top of the operating system, the hidden partition does not exist. Therefore, it can be appreciated that there is the risk that the back-up might not represent a true back-up of the whole of the disc.

It is an object of embodiments of the present invention at least to mitigate some of the problems of the prior art.

### Summary of Invention

Accordingly, a first aspect of embodiments of the present invention provides a data processing system comprising first initialisation software to initialise the data processing system, means to access storage comprising a first region, visible to first software and a second region, invisible to the first software; the system further comprising second initialisation software arranged to provide information associated with the first and second regions to the first software and means to access the second region; the second initialisation software being arranged to intercept a storage access request directed to the first initialisation software and to provide access to the second region in response to that request.

Advantageously, embodiments of the present invention are able to make the ordinarily hidden partition visible to the application by intercepting operating system calls made by the application to access a storage device. Therefore, in the case where the application is a back-up tool, the back-up tool can also back-up the content of such a hidden partition either jointly or severally with creating a back-up of the visible partition.

Preferably, the storage comprises non-volatile storage such as, for example, an HDD. Embodiments are provided in which the second initialisation software derives the information from configuration data associated with the storage. Preferably, the configuration data is derived from a master boot record.

In preferred embodiments the first initialisation software comprises system BIOS code. Furthermore, in preferred embodiments the second initialisation software comprises option ROM code. Preferably, the option ROM code is not intended for initialising hardware.

A further aspect of embodiments of the present invention provides a data processing system comprising a system BIOS, an option ROM, a back-up application and a non-volatile storage having a first partition and a hidden partition that are accessible and inaccessible respectively by the application; the option ROM being arranged to support access to the second partition to allow the back-up application to create a back-up copy of at least part of the hidden partition.

A still further aspect of embodiments of the present invention provides a data processing method for operating a computer system; the computer system comprising first initialisation code, second initialisation code and an application to read at least data of a storage device; the storage device comprising first and second storage regions; the second storage region being invisible to the application; the method comprising the steps of intercepting a second storage region read request issued by the application to the first initialisation software and reading data, via a the second initialisation software, stored by the second storage region.

It will be appreciated that embodiments of the present invention can be realised using software, hardware or a combination of hardware and software. Suitably, embodiments provide a computer program comprising code to implement a system or method as described in the embodiments herein. Furthermore, such code can be distributed in a number of forms such as, for example, via the Internet, in a chip, on an optical disc, on a magnetic disc or via any other suitable means. Accordingly, embodiments provide a computer program product comprising such a computer program.

### Brief Description of the Drawings

Embodiments of the present invention will now be described, by way of example only, with reference to the accompanying drawings in which:
figure 1 shows, schematically, a partitioned disc;
figure 2 shows a back-up process for a partitioned disc;
figure 3 shows a partitioned disc and an access process according to the first embodiment of the present invention; and
figure 4 shows a partitioned disc and an access mechanism for a second aspect of embodiments of the present invention.

### Description of Preferred Embodiments

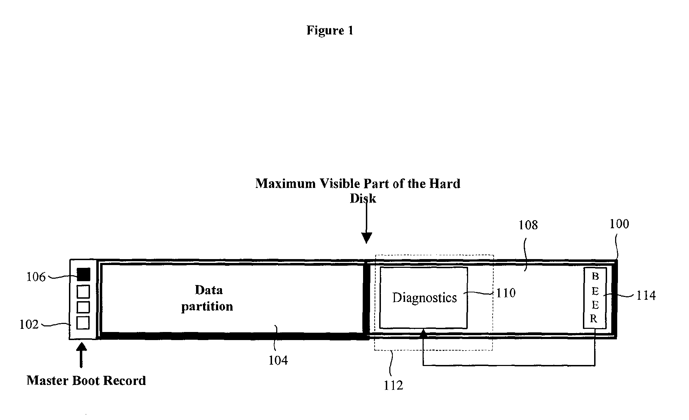

Referring to figure 1, there is shown, schematically, a partitioned disc 100. The partitioned disc 100 comprises a master boot record 102, a first partition 104, which is visible to an operating system (not shown) and applications (not shown) that run on top of the operating system according to whether or not a first flag 106, of four flags conventionally forming part of the master boot record 102, is set. The disc 100 also comprises a hidden partition 108. The hidden partition 108 is not visible to the application and the operating system.

The hidden partition 108 comprises, for example, diagnostics software 110 that can be invoked during the boot-up process to assess the state of health of an associated computer (not shown). The diagnostics software is stored, preferably, within a protected area 112 as defined by the "Protected Area Runtime Interface Extension Service", the details of which are disclosed in ANSI NCIS 317-1998, which is incorporated herein by reference for all purposes.

A BIOS engineering extension record (BEER) 114, which resides in the last sector of the disc 100, is used to locate the protected area 112. In particular, bit 5 of the capabilities word (not shown) together with, for example, the Diagnostic Boot Code Address, which specifies the absolute address of the diagnostics software 110, are used by the BIOS to locate and execute the diagnostics software 110. Alternatively, or additionally, code or data associated with another service area might be accessed via an appropriately defined directory of service entry of the directories of services (not shown) that is accessible via the BEER 114.

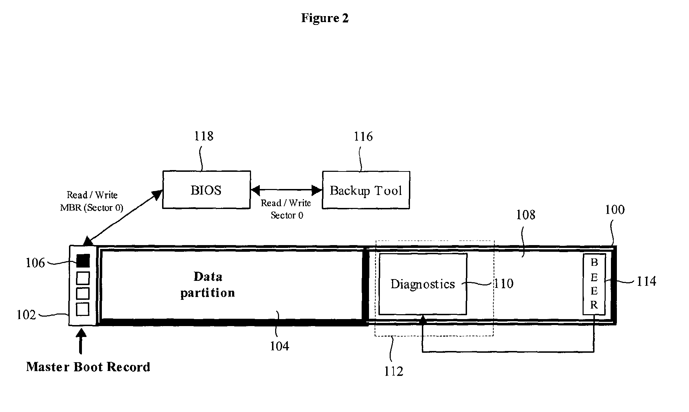

Figure 2 shows how a back-up tool 116 creates a back-up copy (not shown) of the visible partition 104 via a BIOS 118. The back-up tool 116 calls a hard disc interrupt (Int 13h), which causes the BIOS 118 to read the master boot record 102 and, in turn, the partition table (not shown), to return an indication of which partition is the active partition. Table 1 below shows the INT 13h CHS functions that are trapped by the back-up tool 116 and redirected to the option ROM code.

**Table 1**

| FUNCTION CODE | DESCRIPTION |
|---|---|
| 00h | Reset |
| 01h | Get Status |
| 02h | Read Sector |
| 03h | Write Sector |
| 04h | Verify Sector |
| 05h | Format Sector |
| 06h | Format track and set bad sector flag |
| 07h | Format drive starting at given sector |
| 08h | Get drive parameters |
| 0Dh | Reset Hard Disk |
| 15h | Get disc type |
| 16h | Detect disk change |
| 17h | Set disk type |
| 18h | Set media type for format |
| 20h | SCSI/IDE=SAME |

Table 2 below shows the LBA functions that are used by the back-up tool 116 and trapped and redirected to the option ROM code.

**Table 2**

| FUNCTION CODE | DESCRIPTION |
|---|---|
| 41h | Installation Check |
| 42h | Extended Read |
| 43h | Extended Write |
| 44h | Extended Verify Sectors |
| 48h | Extended Parameters |

As will be appreciated by those skilled in the art, the MBR partition table will contain, at offsets 000h, 1BEh, 1CEh, 1DEh, 1EEh and 1Feh, the boot code, a 1^{st} partition entry, a 2^{nd} partition entry, a 3^{rd} partition entry, a 4^{th} partition entry and a boot record signature (55AAh) respectively. The indication of which partition is the active partition is provided in the form of the active partition flag 106. Having been provided with data relating to the visible partition 104, the back-up tool 116 can create the back-up copy of that visible partition 104. However, the back-up tool is unable to access data or software, such as, for example, the diagnostics software 110, stored within the hidden partition 108. Therefore, there is the risk that any back-up of the disc 100 will not include a back-up of the hidden partitions. It will be appreciated that the back-up tool 116 is merely one example of first software that cannot access the hidden partition, even though it would be advantageous to do so.

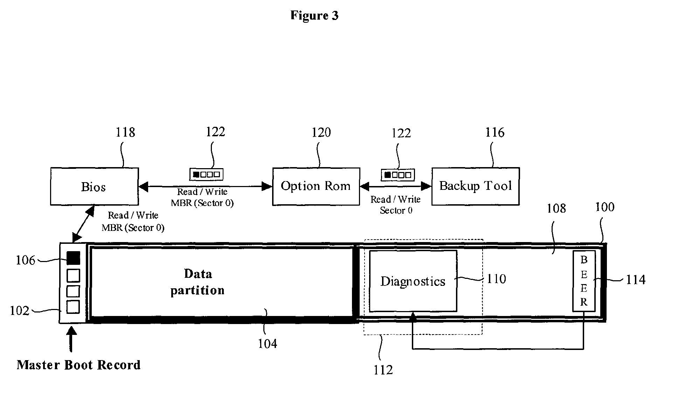

Referring to figure 3, there is shown an embodiment 300 of the present invention. The BIOS 118, upon initialisation of the computer (not shown), is arranged to load a fake option ROM 120 into memory. The fake option ROM code might be stored together with, or separately from, the BIOS code or might form part of the BIOS code. The BIOS 118 and fake option ROM 120 are embodiments of first and second initialisation software respectively. The loaded option ROM is stored in memory, for example, at D4000h-D7FFFh, having, for example, loaded a video option ROM and a LAN option ROM at C0000h-C7FFFh and C8000h-D3FFFh respectively. It will be appreciated that the actual location within memory of the option ROM code will depend upon the configuration of the computer and the number and size of any option ROMs that are also loaded into the memory. It will be appreciated that the fake option ROM 120 does not correspond to an adapter card that is initialised using that option ROM 120. This is in contrast to the video option ROM and LAN option ROM, which are used to initialise a video card and a LAN card respectively. The option ROM 120 comprises BIOS, or BIOS level, executable code that does not have associated hardware to initialise. The option ROM 120 is, in preferred embodiments, arranged to trap, that is, intercept, any hard disc interrupt calls, in particular INT 13h calls issued by the back-up tool 112. The option ROM 120, having trapped a hard disc interrupt, proceeds to read the master boot record 102 via the BIOS interrupt. This read process involves returning to the option ROM 120, via the BIOS 118, data 122 containing an indication of the partitions supported by the hard disc 100. It will be appreciated that this data 122 shows that there is only a single active partition for the hard disc as indicated by the flag 106. The option ROM 120 forwards the indication of the active partition to the back-up tool, which performs a back-up of the active partition.

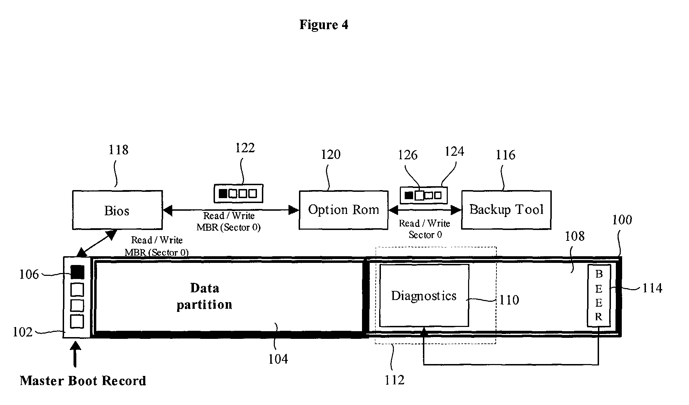

However, in a preferred embodiment, the option ROM 120 modifies the data 122 returned by the BIOS 118 to indicate that the disc 100 includes the hidden partition 108 and provides, via the corresponding partition table entry, modified information 124 that will allow the option ROM 120 to support access to that hidden partition 108 by the back-up tool 116. This embodiment 400 is shown in figure 4 where the data 122 representing the master boot record is shown as passing between the BIOS 118 and the option ROM 120. It can be appreciated that the modified master boot record data 124 forwarded by the option ROM 120 to the back-up tool 116 contains additional data, or a flag 126, that was inserted by the option ROM 120. This has the effect that the back-up tool 116 considers there to be two visible partitions; namely, the originally visible partition 104 and the previously hidden partition 108. Accordingly, the back-up tool 116, when performing the back-up function, will not be constrained to generate disc addresses that only fall within the originally visible partition 104. The diagnostics tool 116 will also generate addresses to access the hidden partition 108. The option ROM 120 is able to intercept the disc accesses generated or requested by the back-up tool 116 and redirects and responds to those requests directly, that is, without involving the system BIOS by modifying the interrupt vector table (not shown) to direct the interrupt to the option ROM code. Therefore, the back-up tool 116 will, in response to receiving the modified master boot record partition data 124, be able to read data stored by the previously hidden partition 108 and will be able to create a back-up of that data.

Although embodiments of the present invention have been described with reference to the hidden partition comprising diagnostics software, embodiments are not limited to such arrangements. Embodiments can be realised in which other software or data are stored within the hidden partition. Furthermore, embodiments can be realised in which the disc comprises more than one hidden partition; all or any of which might be made selectively visible to the back-up tool or other software desiring access to the hidden partition or partitions by arranging for the option ROM to modify the configuration data such as, for example, the MBR or other comparable structure to reveal those hidden partitions.

Conventionally, the system BIOS is stored within a flash memory on the motherboard of a computer. However, embodiments of the present invention are not limited thereto. Embodiments can be realised in which the system BIOS, and, optionally, the fake option ROM, or other option ROMs, are not co-located, that is, they do not form part of the computer system but are accessible, using a suitable communication interface or arrangement. For example, the BIOS might be accessible via a network and network adapter card or chipset. Therefore, it will be appreciated that the MBR is merely one example of configuration data associated with storage that provides an indication of the format of that storage.

Embodiments of the present invention have been described with reference to an HDD, which is formatted to have partitions. However, embodiments can be realised in which some other form of storage, non-volatile or volatile, is used. It will be appreciated that any such volatile or non-volatile other storage might not comprise partitions and that partitions represent merely one example of first and second regions of storage associated with embodiments of the present invention. Examples of such other storage comprise EEPROM, ROM, EPROM, optical storage or optical storage devices, RAM, flash memory and any other type of storage.

It will be appreciated that embodiments can be realised in which access is provided to the whole or any part of the hidden partition. Therefore, the back-up process might create a back-up copy of the whole or any part of the hidden partition.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) might be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising first initialisation software to initialise the data processing system, means to access storage comprising a first region, visible to first software, and a second region, invisible to the first software; the system further comprising second initialisation software arranged to provide information associated with at least one of the first and second regions to the first software and to access the second region; the second initialisation software being arranged to intercept storage access request directed to the first initialisation software and to provide access to the second region in response to that request.

2. A data processing system as claimed in claim 1 in which the storage comprises non-volatile storage.

3. A data processing system as claimed in claim 2 in which the storage comprises an HDD.

4. A data processing system as claimed in any preceding claim, in which the second initialisation software derives the information from configuration data associated with the storage.

5. A data processing system as claimed in claim 4, in which the configuration data is derived from a master boot record.

6. A data processing system as claimed in any preceding claim in which the first initialisation software comprises system BIOS code.

7. A data processing system as claimed in any preceding claim in which the second initialisation software comprises option ROM code.

8. A data processing system as claimed in claim 7 in which the option ROM code is not intended for initialising hardware.

9. A data processing system comprising a system BIOS, an option ROM, a back-up application and a non-volatile storage having a first partition and a hidden partition that are accessible and inaccessible respectively by the first software; the option ROM being arranged to support access to the second partition to allow the back-up application to create a back-up copy of at least part of the hidden partition.

10. A data processing method of operating a computer system; the computer system comprising first initialisation code, second initialisation code and first software to read at least data of a storage device; the storage device comprising first and second storage regions; the second storage region being invisible to the first software; the method comprising the steps of intercepting a second storage region read request issued by the first software to the first initialisation software and reading data, via the second initialisation software, stored by the second storage region.

11. A data processing method as claimed in claim 10 in which the storage comprises non-volatile storage.

12. A data processing method as claimed in claim 11 in which the storage comprises an HDD.

13. A data processing method as claimed in any of claims 10 to 12 in which the second initialisation software derives the information from configuration data associated with the storage.

14. A data processing method as claimed in claim 13, in which the configuration data is derived from a master boot record.

15. A method as claimed in any of claims 10 to 14 in which the first initialisation software comprises system BIOS code.

16. A method as claimed in any of claims 10 to 15 in which the second initialisation software comprises option ROM code.

17. A method as claimed in claim 16 in which the second initialisation software is not intended to initialise hardware.

18. A computer program comprising code to implement a system or method as claimed in any preceding claim.

19. A computer program product comprising computer readable storage storing a computer program as claimed in claim 18.
